# EUROPÄISCHE PATENTSCHRIFT

(11) **EP 3 091 169 B1**
(45) Veröffentlichungstag und Bekanntmachung des Hinweises auf die Patenterteilung: **04.09.2019**
(21) Anmeldenummer: 16000376.0
(22) Anmeldetag: 16.02.2016
(51) Int. Cl.: E06B 9/68, G02B 6/38, G02B 6/42, G08C 23/06

(54) **ELEKTRONISCHE STEUEREINRICHTUNG FÜR EINE VERDUNKELUNGSVORRICHTUNG**
ELECTRONIC CONTROL UNIT FOR A DARKENING DEVICE
DISPOSITIF DE COMMANDE ÉLÉCTRONIQUE POUR UN DISPOSITIF D'ASSOMBRISSEMENT

(30) Priorität: 19.03.2015 DE 202015002104 U
(43) Veröffentlichungstag der Anmeldung: 09.11.2016
(73) Patentinhaber: WIR elektronik GmbH & Co. KG, 48703 Stadtlohn (DE)
(72) Erfinder: RADEMACHER, Wilhelm, 464141 Rhede (DE)
(74) Vertreter: Von Rohr Patentanwälte Partnerschaft mbB

(56) Entgegenhaltungen:
- EP-B1- 0 339 241
- DE-U1- 20 108 867
- Texas Advanced Optoelectronic Solutions: "TSL2580, TSL2581 LIGHT-TO-DIGITAL CONVERTER Specsheet", , 2010, XP55341526, Gefunden im Internet: URL:http://www.mouser.com/catalog/specshee ts/TSL2581.pdf [gefunden am 2017-02-02]

## Beschreibung

Die Erfindung betrifft eine elektronische Steuereinrichtung für eine Verdunkelungsvorrichtung mit den Merkmalen des Oberbegriffs von Anspruch 1.

Verdunkelungsvorrichtungen der in Rede stehenden Art sind beispielsweise Rollläden, Markisen, Rollos, Vorhänge, Lamellenvorhänge etc.. Dann, wenn eine solche Verdunkelungsvorrichtung einen elektromotorischen Antrieb hat, bedarf dieser elektromotorische Antrieb einer Steuereinrichtung. Heutzutage sind dies meist elektronische Steuereinrichtungen beispielsweise mit Mikroprozessoren etc.. Hat man eine elektronische Steuereinrichtung für eine Verdunkelungsvorrichtung der in Rede stehenden Art, so kann man an diese einen sog. Sonnensensor oder Helligkeitssensor anschließen. Ein solcher Helligkeitssensor wird im Bereich eines Fensters, einer Tür o.dgl. angebracht, so dass in Abhängigkeit von der Sonneneinstrahlung auf den Sensor bzw. in Abhängigkeit von der Außenhelligkeit das Fenster bzw. die Tür von einer zugeordneten Verdunkelungsvorrichtung passend verdunkelt werden kann.

Die bekannte elektronische Steuereinrichtung, von der die Erfindung ausgeht (EP 0 339 241 B1), hat einen gummielastisch ausgebildeten Saugfuß, mit dem das passive Lichteinstrahlungselement, beispielsweise eine Licht-Sammellinse, am Fenster oder an einer Tür von innen befestigt werden kann. Von der Saugseite des Saugfußes her einfallendes Sonnenlicht bzw. einfallendes diffus reflektiertes Außenlicht wird an der so gebildeten Lichteinspeisungsstelle dem passiven Lichteinstrahlungselement zugeführt.

An der Rückseite hat der Saugfuß eine Steckfassung für das Ende eines Lichtleiterkabels. Mittels des Lichtleiterkabels, also des einen Lichtleiter enthaltenden Kabels, ist der Saugfuß mit der an anderer Stelle angeordneten Empfangselektronik, dem Empfangsteil verbunden. Sämtliche elektrisch aktiven Bauelemente der Empfangselektronik einschließlich eines optoelektrischen Wandlers befinden sich im Empfangsteil. Das am Lichteinstrahlungselement am Saugfuß einfallende Licht wird also als solches, nämlich über den Lichtleiter im Lichtleiterkabel, zum optoelektrischen Wandler im Empfangsteil weitergeleitet.

Das Lichtleiterkabel ist mit dem Ende des darin befindlichen Lichtleiters im Empfangsteil an die optische Seite des optoelektrischen Wandlers optisch angekoppelt bzw. ankoppelbar.

Für die Auswertung der Signale ist das Signal-/Rausch-Verhältnis des optoelektronischen Wandlers von erheblicher Bedeutung. Durch ein schlechtes Signal-/Rausch-Verhältnis werden die Ansprecheigenschaften beeinträchtigt.

Der Lehre liegt das Problem zugrunde, das Signal-/Rausch-Verhältnis bei der erfindungsgemäßen elektronischen Steuereinrichtung zu optimieren.

Erfindungsgemäß wird insoweit eine Verbesserung dadurch geschaffen, dass man mechanisch eine optische Abschirmung des optoelektrischen Wandlers realisiert. Dazu ist nach der Erfindung vorgesehen, dass das Lichtleiterkabel zumindest an dem dem Empfangsteil zugeordneten Ende einen Steckverbinder aufweist, der in eine Steckfassung am Empfangsteil einsteckbar ist, und dass der optoelektrische Wandler an oder in unmittelbarer Nähe der Steckfassung angeordnet ist.

Der Begriff Steckverbinder soll männliche und weibliche Funktionsteile bezeichnen, ebenso die Bezeichnung Steckfassung. Steckfassung und Steckverbinder sind also austauschbare, zueinander komplementäre Steckverbindungsbauteile.

Erfindungsgemäß sitzt der optoelektrische Wandler am Ende des Lichtleiters, der sich im Lichtleiterkabel befindet. Das aus dem Ende des Lichtleiters austretende Licht kann also im optoelektrischen Wandler umgesetzt werden. Häufig wird sich der optoelektrische Wandler als Bauteil auf einer Platine befinden, die im Empfangsteil an passender Stelle relativ zur Steckfassung angeordnet ist.

Nach besonders bevorzugter Lehre ist insoweit weiter vorgesehen, dass an der Steckfassung ein Mikroschalter oder ein berührungslos betätigbarer Schalter angeordnet ist, der beim Einstecken des Steckverbinders in die Steckfassung betätigbar ist, und dass der optoelektrische Wandler durch Betätigen des Schalters einschaltbar und bei Entfernen des Steckverbinders aus der Steckfassung wieder ausschaltbar ist. Dieser Konstruktion liegt die erfindungsgemäße Erkenntnis zugrunde, dass die Ansprecheigenschaften des erfindungsgemäßen optoelektrischen Wandlers besonders dann gut sind, wenn der Wandler wenig Fremdlicht erhält. Wenig Fremdlicht erhält der Wandler dann, wenn auch durch den Eingang der Steckfassung kein Licht auf das optisch empfindliche Element des optoelektrischen Wandlers fallen kann. Erfindungsgemäß wird der Steckverbinder am Ende des Lichtleiterkabels als optischer Verschluss der Steckfassung am Empfangsteil genutzt und der optoelektrische Wandler erst eingeschaltet, wenn die Steckfassung am Empfangsteil optisch geschlossen ist. Das vermeidet weitestgehend den Einfluss von Streulicht am optoelektrischen Wandler.

Schließlich empfiehlt es sich, dass das Lichtleiterkabel auch an dem dem Lichteinstrahlungselement zugeordneten Ende einen Steckverbinder aufweist, der in eine Steckfassung am Lichteinstrahlungselement oder dem zugeordneten Befestigungselement einsteckbar ist.

Die bekannten elektronischen Steuereinrichtungen der in Rede stehenden Art haben Wandler vorzugsweise in Form von Fotowiderständen. Derartige Wandler sind allerdings hinsichtlich der Recyclingfähigkeit problematisch.

Bevorzugt wird mit einem optoelektrischen Wandler gearbeitet, dessen Werkstoffe oder Werkstoffmischungen praktisch frei von Blei, Quecksilber und Cadmium sind. Dadurch ergibt sich eine deutlich verbesserte Recyclingfähigkeit.

Gemäß Anspruch 5 soll der optoelektrische Wandler auch für Brom und/oder Antimon niedrigste Grenzwerte im Material nicht überschreiten.

Mit den erfindungsgemäß vorgegebenen Grenzwerten für die Wandler wird die Umwelt beim Recycling so wenig wie möglich belastet, das Recycling ist besser durchführbar.

Wandler, die die voranstehenden Anforderungen erfüllen, sind am Markt erhältlich, allerdings bislang nicht für elektronische Steuereinrichtungen der in Rede stehenden Art eingesetzt worden. Beispiele für solche Wandler sind Produkte der AMS AG (früher TAOS Inc.) mit den Bezeichnungen TAOS TSL2580, TSL2581, TSL2571, TSL2568, TSL2569, TSL4531.

Bevorzugte Konstruktionen der elektronischen Steuereinrichtung, die die zuvor beschriebenen Anforderungen erfüllen, sind dadurch gekennzeichnet, dass der optoelektrische Wandler als optisch empfindliches Element mindestens eine Fotodiode, vorzugsweise mindestens eine Breitband-Fotodiode für Lichtwellen im sichtbaren Bereich und im Bereich des Infrarot, oder eine Kombination von mindestens einer für sichtbares Licht empfindlichen Fotodiode und einer für Infrarotlicht empfindlichen Fotodiode aufweist. Bei sehr hohen Anforderungen an die Ansprechempfindlichkeit kann man in einem optoelektrischen Wandler auch eine Reihe von Fotodioden (Array) einsetzen.

Bei der Erläuterung der Kombination von Fotodioden im Anspruch 3 kann die für sichtbares Licht empfindliche Fotodiode auch eine Breitband-Fotodiode sein, die sowohl für Lichtwellen im sichtbaren Bereich als auch für Lichtwellen im Bereich des Infrarots bestimmungsgemäß empfindlich ist.

Besonders bevorzugt ist es, wenn der optoelektrische Wandler einen Verstärker und/oder eine digital arbeitende Ausgangsstufe aufweist.

Besonders bevorzugt ist die Kombination der beiden zuvor angesprochenen Vorschläge. Die optoelektrischen Wandler, die unter den zuvor geschilderten Randbedingungen der verbesserten Recyclingfähigkeit einsetzbar sind, haben unter Umständen ein weniger gutes Signal-/Rausch-Verhältnis als bislang bereits eingesetzte optoelektrische Wandler. Durch die weiter oben angesprochenen mechanischen Maßnahmen wird insoweit eine Verbesserung geschaffen.

Die im vorliegenden Text gewählten Formulierungen *"angeschlossen oder anschließbar", "angekoppelt oder ankoppelbar"* o.dgl. sollen zum Ausdruck bringen, dass man die elektronische Steuereinrichtung sowohl in komplett zusammengebautem Zustand *(angeschlossen; angekoppelt)* als auch im noch ganz oder teilweise zerlegten Zustand *(anschließbar; ankoppelbar)* betrachtet. Die Begrifflichkeit *"verbunden oder versehen"* soll zum Ausdruck bringen, dass es sich im einen Fall um zwei an sich voneinander zu unterscheidende, aber miteinander verbundene Bauteile handelt, im anderen Fall das eine Bauteil eine bestimmte bauliche Ausgestaltung des anderen Bauteils bildet.

Im Folgenden wird die Erfindung anhand einer lediglich ein bevorzugtes Ausführungsbeispiel darstellenden Zeichnung näher erläutert. In der Zeichnung zeigt
- Fig. 1: in einer schematischen Ansicht beispielhaft ein Fenster mit einer zugeordneten, motorisch angetriebenen Verdunkelungsvorrichtung und einem an der Fensterscheibe des Fensters angebrachten Helligkeitssensor,
- Fig. 2: ein Beispiel eines Sensors gemäß dem den Ausgangspunkt bildenden Stand der Technik,
- Fig. 3: eine erfindungsgemäße elektronische Steuereinrichtung mit noch nicht angeschlossenem Lichtleiterkabel (oben) und mit angeschlossenem Lichtleiterkabel (unten).

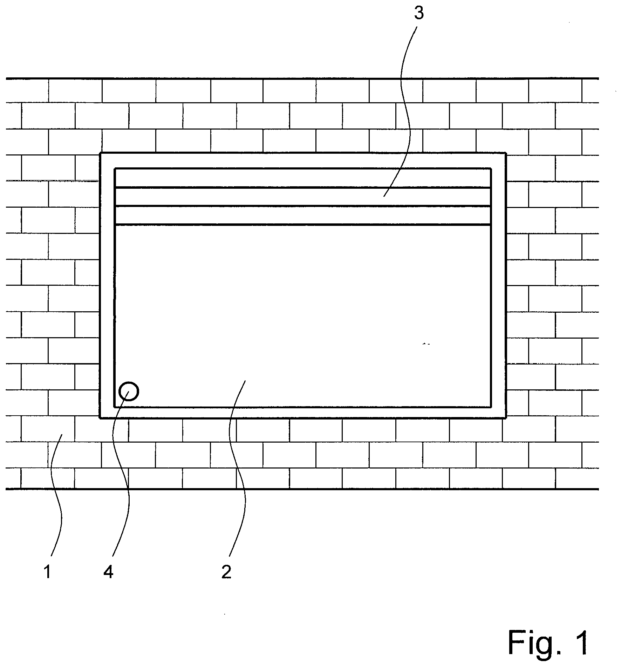

Fig. 1 zeigt in einer Ansicht ein in einer Wand 1 eines Gebäudes befindliches Fenster 2, das durch eine zugeordnete, motorisch angetriebene Verdunkelungsvorrichtung 3, hier in Form eines Rollladens, abgeschattet werden kann. Alternativen für Verdunkelungsvorrichtungen sind im allgemeinen Teil der Beschreibung beispielhaft angesprochen worden.

Am Fenster 2 befindet sich links unten angedeutet ein Sensor 4, mit dem die Sonneneinstrahlung am Fenster 2 bzw. die Helligkeit der Umgebung erfassbar ist. Es handelt sich also um einen Sonnensensor bzw. einen Helligkeitssensor. Auf den in der Beschreibungseinleitung diskutierten Stand der Technik darf dazu hingewiesen werden.

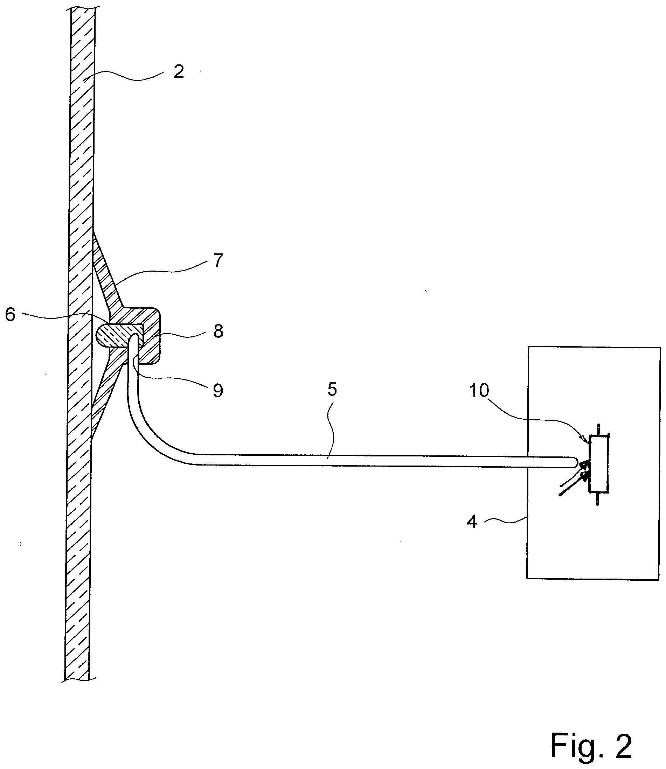

Fig. 2 zeigt eine dem Stand der Technik entsprechende elektronische Steuereinrichtung für eine Verdunkelungsvorrichtung 3. Die elektronische Steuereinrichtung hat zunächst ein Empfangsteil 4. An das Empfangsteil 4 ist ein Lichtleiterkabel 5 angeschlossen (bzw. einschließbar). An das Lichtleiterkabel 5 ist am dem Fenster 2 zugeordneten Ende ein passives Lichteinstrahlungselement 6 angeschlossen (oder anschließbar). Bei dem Lichteinstrahlungselement 6 handelt es sich hier um eine Linse, die mit einem schräg angeschnittenen Ende des Lichtleiters im Lichtleiterkabel 5 zusammenwirkt.

Das Lichteinstrahlungselement 6 selbst ist hier mit einem Befestigungselement 7 verbunden, mit dessen Hilfe es am Fenster 2 befestigt ist. Bei dem Befestigungselement 7 handelt es sich im vorliegenden Beispiel um den im allgemeinen Teil der Beschreibung bereits mehrfach erwähnten Saugfuß. Bei diesem dem Stand der Technik entsprechenden Beispiel weist der Saugfuß, der das Befestigungselement 7 bildet, an der Rückseite eine Ausformung 8 und eine Einsteckaufnahme 9 für das Ende des Lichtleiterkabels 5.

Das Empfangsteil 4 weist bei dem in Fig. 2 dargestellten Beispiel des Standes der Technik einen optoelektrischen Wandler 10 auf. Dieser ist in Fig. 2 als Fototransistor dargestellt. Das Lichtleiterkabel 5 bzw. das Ende des Lichtleiters im Lichtleiterkabel 5 ist an die optische Seite des optoelektrischen Wandlers 10 optisch angekoppelt (oder ankoppelbar).

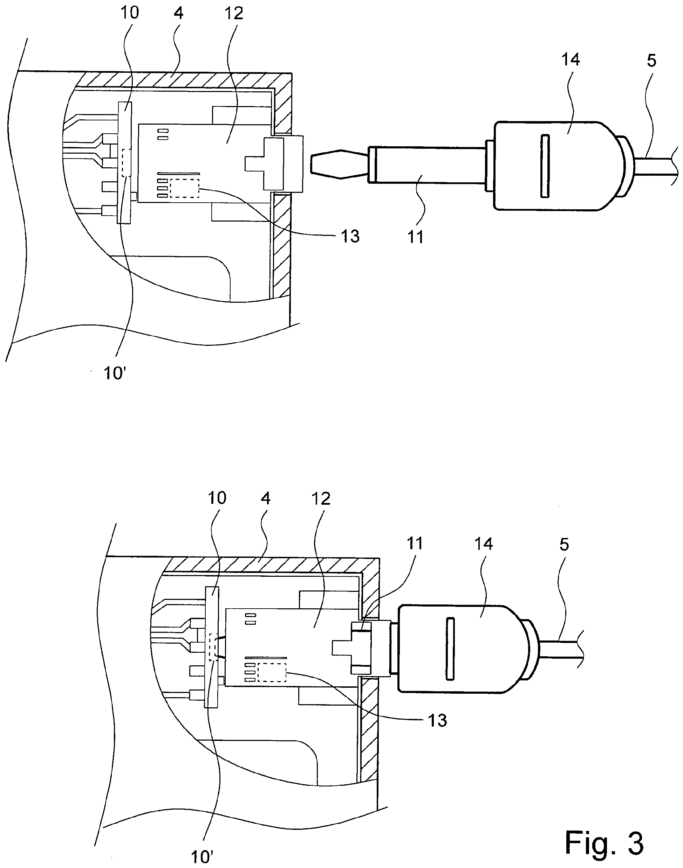

Die Erfindung befasst sich mit der elektronischen Steuereinrichtung mit besonderem Blick auf das Empfangsteil 4. In Fig. 3 sieht man dazu oben das Empfangsteil 4 der elektronischen Steuereinrichtung noch getrennt vom Lichtleiterkabel 5. Das Gehäuse des Empfangsteils 4 ist dabei an der Oberseite aufgeschnitten, so dass man in das Innere des Gehäuses des Empfangsteils 4 hineinsehen kann. Man sieht links den optoelektrischen Wandler 10 als Platine, an der das optisch empfindliche Element 10' des optoelektrischen Wandlers 10 gestrichelt angedeutet ist.

Hier ist zunächst wesentlich, dass der optoelektrische Wandler 10 aus Werkstoffen oder Werkstoffmischungen besteht, bei denen eine Konzentration im homogenen Material von 0,1% für Blei, von 0,1% für Quecksilber und von 0,01% für Cadmium nicht überschritten wird. Besonders bevorzugt ist eine Ausführungsform der elektronischen Steuereinrichtung, bei der vorgesehen ist, dass der optoelektrische Wandler 10 aus Werkstoffen oder Werkstoffmischungen besteht, bei denen eine Konzentration im homogenen Material von 0,1% für Brom und/oder von 0,1% für Antimon nicht überschritten wird.

Für die konstruktive Ausgestaltung des optoelektrischen Wandlers 10 empfiehlt sich nach bevorzugter Lehre, dass der optoelektrische Wandler 10 als optisch empfindliches Element 10' mindestens eine Fotodiode, vorzugsweise mindestens eine Breitband-Fotodiode für Lichtwellen im sichtbaren Bereich und im Bereich des Infrarot, oder eine Kombination von mindestens einer für sichtbares Licht empfindlichen Fotodiode und einer für Infrarotlicht empfindlichen Fotodiode aufweist.

Im dargestellten und bevorzugten Ausführungsbeispiel kann man davon ausgehen, dass das optisch empfindliche Element 10' als Breitband-Fotodiode (sichtbares Licht und Infrarotlicht) ausgeführt ist. Das ist besonders zweckmäßig mit Bezug auf den Einsatz der elektronischen Steuereinrichtung im Zusammenhang mit einem Sonnensensor bzw. Helligkeitssensor an einem Fenster 2 zur Steuerung einer Verdunkelungsvorrichtung 3.

Das dargestellte und bevorzugte Ausführungsbeispiel zeigt den optoelektrischen Wandler 10 als Platine. Es ist also eine größere Baugruppe, die mehr umfasst als nur das optisch empfindliche Element 10'. Insbesondere empfiehlt es sich, dass der optoelektrische Wandler 10 einen Verstärker und/oder eine digital arbeitende Ausgangsstufe aufweist.

In der Darstellung in Fig. 2 zum Stand der Technik ist das Lichtleiterkabel 5 nur schematisch dargestellt worden. Für das hier dargestellte und bevorzugte Ausführungsbeispiel einer eigenständig erfinderischen elektronischen Steuereinrichtung empfiehlt es sich jedoch nach bevorzugter Lehre, dass das Lichtleiterkabel 5 zumindest an dem dem Empfangsteil 4 zugeordneten Ende einen Steckverbinder 11 aufweist, der in eine Steckfassung 12 am Empfangsteil 4 einsteckbar ist. Auf die Bedeutung der Begriffe "Steckverbinder 11" und "Steckfassung 12", die im allgemeinen Teil der Beschreibung für die vorliegende Anmeldung erläutert worden ist, darf hier nochmals hingewiesen werden.

Dargestellt ist die Ausgestaltung des Steckverbinders 11 am Lichtleiterkabel 5 als Klinkenstecker und die Ausgestaltung der Steckfassung 12 im bzw. am Gehäuse des Empfangsteils 4 als Klinken-Steckfassung. Klinkenstecker dieser Art, die hier bevorzugt Verwendung finden können, findet man bei Kopfhörern im Audiobereich.

Grundsätzlich ist die Lehre der Erfindung aber nicht auf die Verwendung von Klinkensteckern beschränkt. Ein solcher ist nur hier besonders zweckmäßig einsetzbar.

In Fig. 3 ist dargestellt, dass der optoelektrische Wandler 10 in Form der entsprechenden Platine in unmittelbarer Nähe Steckfassung 12, nämlich gleich links davon im Gehäuse des Empfangsteils 4, angeordnet ist.

Das dargestellte und bevorzugte Ausführungsbeispiel zeigt den Steckverbinder 11 mit einer Handhabe 14. Man kann diesen an der Handhabe 14 handhaben. Er ist in Fig. 3 oben noch nicht in die Steckfassung 12 eingesteckt worden. In Fig. 3 unten ist der Steckverbinder 11 in die Steckfassung 12 eingesteckt worden. Man sieht dann in Fig. 3 links an der Platine, die den optoelektrischen Wandler 10 bildet, die Spitze des Lichtleiterkabels 5 bzw. des Steckverbinders 11 am Ende des Lichtleiterkabels 5. Dort ist die Austrittsstelle des im Lichtleiterkabel 5 befindlichen Lichtleiters, der hier unmittelbar mit dem optisch empfindlichen Element 10' des optoelektrischen Wandlers 10 in optischer Verbindung steht und an diesen angekoppelt ist.

Nach weiter bevorzugter Lehre ist ferner vorgesehen, dass an der Steckfassung 12 ein Mikroschalter 13 oder ein berührungslos betätigbarer Schalter angeordnet ist.

Dieser ist beim Einstecken des Steckverbinders 11 in die Steckfassung 12 betätigbar. Durch Betätigen des Schalters 13 wird der optoelektrische Wandler 10 eingeschaltet. Bei Entfernen des Steckverbinders 11 aus der Steckfassung 12 wird der Schalter 13 wieder ausgeschaltet. Der hier realisierte, auf den Klinkenstecker als Steckverbinder 11 abgestimmte Mikroschalter 13 ist in Fig. 3 an beiden Stellen an der Steckfassung 12 gestrichelt angedeutet.

Anstelle eines Mikroschalters 13 kann sich an der Steckfassung 12 auch ein berührungslos betätigbarer Schalter, beispielsweise ein kapazitiver oder induktiver Näherungsschalter, befinden. Grundsätzlich ist es schaltungstechnisch auch möglich, den Schalter nicht an der Steckfassung 12, sondern am Steckverbinder 11 anzuordnen, damit also dem Lichtleiterkabel 5 zuzuordnen. Dann müsste man aber für eine Signalübertragung vom Lichtleiterkabel 5 in die Elektronik des Empfangsteils 4 sorgen, was Aufwand verursacht.

Wesentlich für die Erfindung ist bei diesem Ausführungsbeispiel, dass der Schalter 13 beim Einstecken des Steckverbinder 11 in die Steckfassung 12 betätigbar ist, und dass durch Betätigung des Schalters 13 der optoelektrische Wandler 10 einschaltbar ist. Bei Entfernen des Steckverbinders 11 aus der Steckfassung 12 wird umgekehrt der Schalter 13 im gegenteiligen Sinne betätigt und der Wandler 10 wird dann ausgeschaltet.

Durch Einstecken des Steckverbinders 11 in die Steckfassung 12 wird bei der erfindungsgemäßen elektronischen Steuereinrichtung in dieser bevorzugten Ausführungsform die Funktion des Sonnensensors bzw. Helligkeitssensors aktiviert, indem der optoelektrische Wandler 10 eingeschaltet wird. Erst jetzt ist der optoelektrische Wandler 10 aktiv. Wie man in Fig. 3 sieht, ist durch Einstecken des Steckverbinders 11 in die Steckfassung 12 die Lichteintrittsstelle an der Steckfassung 12 geschlossen worden. Der optoelektrische Wandler 10 ist von der äußeren Umgebungshelligkeit getrennt. Ihn erreicht nur noch das Licht, das durch den Lichtleiter im Lichtleiterkabel 5 vom Lichteinstrahlungselement 6 zum optisch empfindlichen Element 10' des optoelektrischen Wandlers 10 geleitet wird. Die Ansprechcharakteristik der elektronischen Steuereinrichtung insgesamt wird dadurch optimiert.

Grundsätzlich ist es im Übrigen auch möglich, das Lichtleiterkabel 5 auch am anderen Ende, also am Lichteinstrahlungselement 6, mit einem entsprechenden Steckverbinder zu versehen, der mit einer dort positionierten Steckfassung am Lichteinstrahlungselement 6 bzw. am Befestigungselement 7 zusammenwirkt.

Im Empfangsteil 4 der erfindungsgemäßen elektronischen Steuereinrichtung befinden sich im Übrigen vorzugsweise alle notwendigen schaltungstechnischen Baugruppen, insbesondere auch ein in einem solchen Fall üblicherweise eingesetzter Mikroprozessor, der die Funktionen auch für den elektromotorischen Antrieb der Verdunkelungsvorrichtung 3 unter anderem auf Basis der Signale des optoelektrischen Wandlers 10 steuert.

### Bezugszeichenliste:

- 1: Wand
- 2: Fenster
- 3: Verdunkelungsvorrichtung
- 4: Empfangsteil
- 5: Lichtleiterkabel
- 6: Lichteinstrahlungselement
- 7: Befestigungselement
- 8: Ausformung
- 9: Einsteckaufnahme
- 10: optoelektrischer Wandler
- 10': optisch empfindliches Element
- 11: Steckverbinder
- 12: Steckfassung
- 13: Mikroschalter
- 14: Handhabe

## Patentansprüche

1. Elektronische Steuereinrichtung für eine Verdunkelungsvorrichtung wie einen Rollladen, eine Markise, ein Rollo, einen Vorhang o.dgl.,
mit einem Empfangsteil (4), einem an das Empfangsteil (4) anschließbaren Lichtleiterkabel (5) und einem am Ende an das Lichtleiterkabel (5) angeschlossenen oder anschließbaren passiven Lichteinstrahlungselement (6),
wobei das Lichteinstrahlungselement (6) vorzugsweise mit einem Befestigungselement (7), insbesondere einem Saugnapf, zum Befestigen an einem Untergrund verbunden oder versehen ist,
wobei das Empfangsteil (4) einen optoelektrischen Wandler (10) aufweist und das Lichtleiterkabel (5) mit dem dem Empfangsteil (4) zugeordneten Ende seines Lichtleiters an die optische Seite des optoelektrischen Wandlers (10) optisch angekoppelt oder ankoppelbar ist,
**dadurch gekennzeichnet,**
**dass** das Lichtleiterkabel (5) zumindest an dem dem Empfangsteil (4) zugeordneten Ende einen Steckverbinder (11) aufweist, der in eine Steckfassung (12) am Empfangsteil (4) einsteckbar ist, und
**dass** der optoelektrische Wandler (10) an oder in unmittelbarer Nähe der Steckfassung (12) angeordnet ist.

2. Steuereinrichtung nach Anspruch 1, **dadurch gekennzeichnet,**
**dass** an der Steckfassung (12) ein Mikroschalter (13) oder ein berührungslos betätigbarer Schalter angeordnet ist, der beim Einstecken des Steckverbinders (11) in die Steckfassung (12) betätigbar ist, und
**dass** der optoelektrische Wandler (10) durch Betätigen des Schalters (13) beim Einstecken des Steckverbinders (11) einschaltbar und bei Entfernen des Steckverbinders (11) aus der Steckfassung (12) wieder ausschaltbar ist.

3. Steuereinrichtung nach Anspruch 1 oder 2, **dadurch gekennzeichnet,**
**dass** das Lichtleiterkabel (5) auch an dem dem Lichteinstrahlungselement (6) zugeordneten Ende einen Steckverbinder (11) aufweist, der in eine Steckfassung (12) am Lichteinstrahlungselement (6) oder dem zugeordneten Befestigungselement (7) einsteckbar ist.

4. Steuereinrichtung nach einem der Ansprüche 1 bis 3, **dadurch gekennzeichnet,**
**dass** der optoelektrische Wandler (10) aus Werkstoffen oder Werkstoffmischungen besteht, bei denen eine Konzentration im homogenen Material von 0,1% für Blei, von 0,1% für Quecksilber und von 0,01% für Cadmium nicht überschritten wird.

5. Steuereinrichtung nach Anspruch 4, **dadurch gekennzeichnet,**
**dass** der optoelektrische Wandler (10) aus Werkstoffen oder Werkstoffmischungen besteht, bei denen eine Konzentration im homogenen Material von 0,1% für Brom und/oder von 0,1% für Antimon nicht überschritten wird.

6. Steuereinrichtung nach Anspruch 4 oder 5, **dadurch gekennzeichnet,**
**dass** der optoelektrische Wandler (10) als optisch empfindliches Element (10') mindestens eine Fotodiode, vorzugsweise mindestens eine Breitband-Fotodiode für Lichtwellen im sichtbaren Bereich und im Bereich des Infrarot, oder eine Kombination von mindestens einer für sichtbares Licht empfindlichen Fotodiode und einer für Infrarotlicht empfindlichen Fotodiode aufweist.

7. Steuereinrichtung nach einem der Ansprüche 4 bis 6, **dadurch gekennzeichnet,**
**dass** der optoelektrische Wandler (10) einen Verstärker und/oder eine digital arbeitende Ausgangsstufe aufweist.

## Claims

1. Electronic control device for a shading apparatus such as a roller shutter, an awning, a roller blind, a curtain or the like,
comprising a receiving part (4), a light guide cable (5) which can be connected to the receiving part (4), and a passive light irradiation element (6) which is connected or can be connected to the light guide cable (5) at the end,
wherein the light irradiation element (6) is preferably connected to or provided with a fastening element (7), in particular a suction cup, for fastening to a substrate,
wherein the receiving part (4) has an optoelectrical transducer (10) and the light guide cable (5), by way of that end of its light guide which is associated with the receiving part (4), is optically coupled or can be optically coupled to the optical side of the optoelectrical transducer (10),
**characterized**
**in that** the light guide cable (5) has a plug-in connector (11) at least at that end which is associated with the receiving part (4), which plug-in connector can be inserted into a plug-in socket (12) on the receiving part (4), and
**in that** the optoelectrical transducer (10) is arranged on or in the immediate vicinity of the plug-in socket (12) .

2. Control device according to Claim 1, **characterized in that** a microswitch (13) or a switch which can be operated without contact is arranged on the plug-in socket (12), which microswitch or switch can be operated when the plug-in connector (11) is inserted into the plug-in socket (12), and
**in that** the optoelectrical transducer (10) can be switched on by operation of the switch (13) when the plug-in connector (11) is inserted and can be switched off again when the plug-in connector (11) is removed from the plug-in socket (12).

3. Control device according to Claim 1 or 2, **characterized**
**in that** the light guide cable (5) also has a plug-in connector (11) at that end which is associated with the light irradiation element (6), which plug-in connector (11) can be inserted into a plug-in socket (12) on the light irradiation element (6) or the associated fastening element (7).

4. Control device according to one of Claims 1 to 3, **characterized**
**in that** the optoelectrical transducer (10) is composed of materials or mixtures of materials in which a concentration in homogeneous material of 0.1% for lead, of 0.1% for mercury and of 0.01% for cadmium is not exceeded.

5. Control device according to Claim 4, **characterized in that** the optoelectrical transducer (10) is composed of materials or mixtures of materials in which a concentration in homogeneous material of 0.1% for bromide and/or of 0.1% for antimony is not exceeded.

6. Control device according to Claim 4 or 5, **characterized**
**in that** the optoelectrical transducer (10) has, as the optically sensitive element (10'), at least one photodiode, preferably at least one broadband photodiode for light waves in the visible range and in the infrared range, or a combination of at least one photodiode which is sensitive to visible light and one photodiode which is sensitive to infrared light.

7. Control device according to one of Claims 4 to 6, **characterized**
**in that** the optoelectrical transducer (10) has an amplifier and/or a digitally operating output stage.

## Revendications

1. Dispositif de commande électronique destiné à un dispositif d'occultation tel qu'un volet roulant, un auvent, un store enrouleur, un rideau ou similaire,
le dispositif de commande électronique comprenant
une partie de réception (4), un câble à fibres optiques (5) pouvant être raccordé à la partie de réception (4) et un élément rayonnement lumineux passif (6) raccordé ou pouvant être raccordé par son extrémité au câble à fibres optiques (5),
l'élément de rayonnement lumineux (6) étant de préférence relié à un élément de fixation (7), ou muni d'un élément de fixation, en particulier d'une ventouse, pour la fixation à un substrat,
la partie de réception (4) comportant un transducteur opto-électrique (10) et le câble à fibres optiques (5) étant couplé ou pouvant être couplé optiquement à l'extrémité, associée à la partie de réception (4), de sa fibre optique du côté optique du transducteur opto-électrique (10),
**caractérisé en ce que**
le câble à fibres optiques (5) comporte, au moins à l'extrémité associée à la partie de réception (4), un connecteur mâle (11) qui peut être enfiché dans un connecteur femelle (12) de la partie de réception (4), et **en ce que**
le convertisseur opto-électrique (10) est disposé au niveau ou à proximité immédiate du connecteur femelle (12).

2. Dispositif de commande selon la revendication 1, **caractérisé en ce que**
un micro-interrupteur (13) ou un interrupteur actionnable sans contact est disposé au niveau du connecteur femelle (12) et peut être actionné lors de l'enfichage du connecteur mâle (11) dans le connecteur femelle (12), et **en ce que**
le convertisseur opto-électrique (10) peut être activé par actionnement de l'interrupteur (13) lors de l'enfichage du connecteur mâle (11) et à nouveau désactivé lors du retrait du connecteur mâle (11) du connecteur femelle (12).

3. Dispositif de commande selon la revendication 1 ou 2, **caractérisé en ce que**
le câble à fibres optiques (5) présente également, à l'extrémité associée à l'élément de rayonnement lumineux (6), un connecteur mâle (11) qui peut être enfiché dans un connecteur femelle (12) au niveau de l'élément de rayonnement lumineux (6) ou de l'élément de fixation associé (7).

4. Dispositif de commande selon l'une des revendications 1 à 3, **caractérisé en ce que**
le convertisseur opto-électrique (10) est formé à partir de matières ou de mélanges de matières pour lesquels une concentration dans la matière homogène de 0,1 % pour le plomb, de 0,1 % pour le mercure et de 0,01 % pour le cadmium n'est pas dépassée.

5. Dispositif de commande selon la revendication 4, **caractérisé en ce que**
le convertisseur opto-électrique (10) est formé à partir de matières ou de mélanges de matières pour lesquels une concentration dans la matière homogène de 0,1 % pour le brome et/ou de 0,1 % pour l'antimoine n'est pas dépassée.

6. Dispositif de commande selon la revendication 4 ou 5, **caractérisé en ce que** le convertisseur opto-électrique (10) comprend comme élément optiquement sensible (10') au moins une photodiode, de préférence au moins une photodiode à large bande pour des ondes lumineuses dans le domaine visible et dans le domaine infrarouge, ou une combinaison d'au moins une photodiode sensible à la lumière visible et d'une photodiode sensible à la lumière infrarouge.

7. Dispositif de commande selon l'une des revendications 4 à 6, **caractérisé en ce que** le convertisseur opto-électrique (10) comporte un amplificateur et/ou un étage de sortie numérique.
